# EUROPEAN PATENT APPLICATION

(11) **EP 1 480 463 A2**
(43) Date of publication of application: **24.11.2004**
(21) Application number: 04012104.8
(22) Date of filing: 21.05.2004
(51) Int. Cl.: H04N 7/50, H04N 7/26

(54) **Adaptive moving picture coding method based on block classification**

(30) Priority: 23.05.2003 KR 2003032742
(71) Applicant: LG Electronics Inc., Seoul (KR)
(72) Inventor: Yu, Jae Shin, Gwanak-gu Seoul (KR); Lee, Jin Soo, Songpa-gu Seoul (KR)
(74) Representative: Vetter, Ewald Otto

(57) **Abstract**

There is provided a moving picture coding method, which is capable of providing high picture quality and high compression ratio. The moving picture coding method includes the steps of: classifying an inputted image into predetermined image groups according to characteristic of a sense of sight; assigning different weights according to the respective image groups to change a quantization parameter; applying low pass filters (LPFs) having different frequency magnitudes; and performing a variable length coding (VLC) to the respective image groups.

## Description

### BACKGROUND OF THE INVENTION

### Field of the Invention

The present invention relates to a moving picture coding method, and more particularly, to a moving picture coding method, which is capable of providing high picture quality and high compression ratio.

### Description of the Related Art

Digital video services using Internet streaming or video conferencing have rapidly increased in recent years. Since such video services include a large amount of transmission data, video compression is generally performed. A general video compression method is performed through a proper combination of a lossless scheme and a lossy scheme. Video data is converted into other domain using the lossless scheme and a portion that human's eyes recognize less insensitive is removed using the lossy scheme.

Video compression always has relation to bit rate of specific range. A method of performing video compression according to a given bit rate is to calculate and designate quantization parameter (QP) to match with bit rate. If the quantization parameter is designated, discrete cosine transform (DCT) is performed to an input image and quantization is performed based on macroblock unit, thereby producing compressed bit stream.

Among a variety of information DCTed using the quantization parameter, high frequency information to which human's eyes are less sensitive is removed. Also, when the compression is performed, motion estimation and motion compensation are performed to previous image to thereby extract motion vector. Using the motion vector, difference between current image and previous image is compressed.

At this point, the compression data is error of the motion compensation. If the quantization is performed, information on such motion compensation difference value is also reduced. A compensation method using the reduction of spatiotemporal information increases the compression ratio by reducing the number of encoding bits.

However, in case the bit rate is reduced in such a manner, the degradation of picture quality occurs differently depending on the kinds of reducing information. In other words, in case the quantization parameter is calculated and designated, while an amount of reducing information is equal to the macroblock unit, persons feel the degradation of picture quality great in certain macroblocks and less in certain macroblocks. In recent years, researches have been made on video compression technologies, which can enhance the quality of image and decreasing an amount of encoding data using humans' sense of sight.

In the video compression, high frequency information to which human's eyes are less sensitive is removed using the quantization parameter, thereby decreasing an amount of encoding bits. Meanwhile, researches have been made on methods of enhancing the compression ratio and maintaining the picture quality in consideration of characteristics of human's eyes.

Recent researches have been made for enhancing the picture quality in consideration of characteristics of human's eyes.

In the general video compression method, basic units of the DCT and the quantization are 8×8 block units. While the DCT is the lossless conversion method, the quantization is the lossy compression method. Therefore, if the quantization is performed with large values, a blocking phenomenon occurs as a main factor of degrading the picture quality, so that boundary regions of the block unit are noticeable. In addition to the blocking phenomenon, a ringing phenomenon that ripples occurs in edge portions at high frequency regions acts as a main factor of degrading the picture quality.

In other words, the blocking phenomenon is visible to human's eyes at uniform regions having low image complexity and the ringing phenomenon is visible at regions having high image complexity.

### SUMMARY OF THE INVENTION

Accordingly, the present invention is directed to a moving picture coding method that substantially obviates one or more problems due to limitations and disadvantages of the related art.

An object of the present invention is to provide a moving picture coding method, which is capable of enhancing picture quality and compression ratio by performing a moving picture coding while reflecting a visible factor.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a moving picture coding method comprises the steps of: extracting a motion vector with respect to an inputted image through motion estimation and motion compensation, performing Discrete cosine transform (DCT) to a corresponding difference image, and setting an initial quantization parameter; classifying the inputted image into an edge image group, a flat image group (an uniform image group), and a complex image group, based on macroblock unit, according to characteristic of a sense of sight; assigning different weights according to the classified image groups to change the quantization parameter for the respective image groups; and performing a quantization using the changed quantization parameter.

According to another embodiment of the present invention, a moving picture coding method includes the steps of: extracting a motion vector with respect to an inputted image through motion estimation and motion compensation, performing a Discrete cosine transform (DCT) to a corresponding difference image, and setting a quantization parameter; classifying the inputted image into an edge image group, a flat image group (an uniform image group), and a complex image group, based on macroblock unit, according to characteristic of a sense of sight; performing a quantization using the set quantization parameter; applying low pass filters (LPFs) having different frequency magnitudes according to the classified image groups; and performing a variable length coding (VLC) to the respective image groups to which the low pass filters are applied differently.

According to a further another embodiment of the present invention, a moving picture coding method includes the steps of: extracting a motion vector with respect to an inputted image through motion estimation and motion compensation, performing a Discrete cosine transform (DCT) to a corresponding difference image, and setting a quantization parameter; classifying the inputted image into an edge image group, a flat image group (an uniform image group), and a complex image group, based on macroblock unit, according to characteristic of a sense of sight; assigning different weights according to the classified image groups to change the quantization parameter for the respective image groups; performing a quantization using the changed quantization parameter; applying low pass filters (LPFs) having different frequency magnitudes according to the classified image groups; and performing a variable length coding (VLC) to the respective image groups to which the low pass filters are applied differently.

Preferably, magnitude of the quantization parameter changed according to the respective image groups is set to increase in order of the edge image group, the flat image group (the uniform image group) and the complex image group.

Preferably, the frequency magnitude of the low pass filters applied differently according to the respective image groups is set to increase in order of the complex image group, the flat image group (the uniform image group) and the edge image group.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a schematic view illustrating a moving picture coding method according to the related art;

Fig. 2 is a flowchart illustrating sequential procedures of dividing an inputted video image into an edge group, an uniform group and a complex group in a moving picture coding method according to the present invention;

Fig. 3 is a view illustrating a test of checking whether an inputted video image is an edge block, an uniform block or a complex block in the moving picture coding method according to the present invention;

Fig. 4 illustrates the sensitivity in case the quantization parameter and the low pass filters are applied to the edge image group, the flat image group and the complex image group in the moving picture coding method according to the present invention; and

Fig. 5 is a flowchart illustrating sequential procedures of coding a moving picture in the moving picture coding method according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

When video compression according to the present invention is performed, data of regions to which human's eyes are sensitive are eliminated less and data of the other regions are eliminated much, thereby maintaining more excellent picture quality with respect to the same amount of data than the related art compression method.

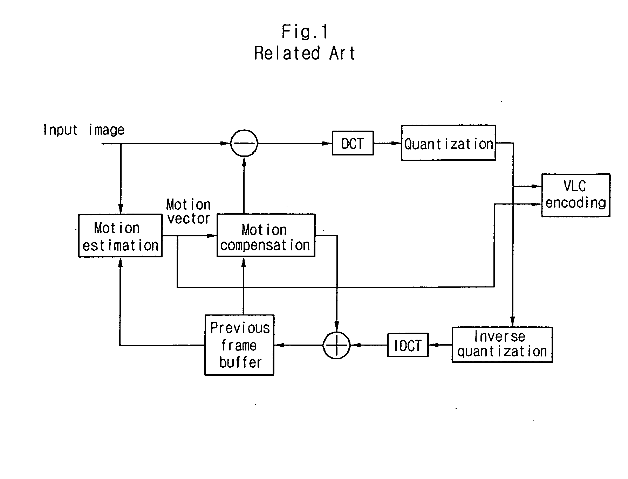

A moving picture coding method according to the related art will now be described with reference to Fig. 1. Referring to Fig. 1, motion estimation and motion compensation are performed to an input image to extract motion vector. Then, discrete cosine transform (DCT) and quantization are performed to a difference image. Variable length coding (VLC) is performed to the quantized data in order for more efficient data compression.

An original image is reconstructed by adding the previous image and the inverse quantized and inverse DCTed image. A difference image of next image is obtained using the reconstructed image. In this manner, video data compression is achieved.

As is well known, when all video data are compressed, an amount of compressed data becomes large. Therefore, a portion similar to a previous image is found to obtain a motion vector. Then, only its difference value is encoded and a variable length coding (VLC) is performed. At this point, the video compression is largely divided into a lossless conversion part and a lossy compression part. The lossless conversion process converts video information of two-dimension into frequency domain through the DCT.

The reason why the video information is converted into the frequency information is that the video information can be divided into high frequency information and low frequency information. Human's eyes do not respond sensitively if frequency information is eliminated to some degree. Therefore, when the video compression ratio is increased, the high frequency information is eliminated. The method of eliminating the high frequency information is referred to as a lossy compression method and the high frequency information is eliminated using the quantization parameter. The quantization parameter is a value that divides the DCTed video data.

Since the general video data has a large amount of low frequency information, the low frequency information is reconstructed to some degree even if the low frequency information value is divided by the quantization parameter. However, since the general video data has a small amount of high frequency information, the high frequency information is almost eliminated if the quantization parameter is large. Such an eliminated information cannot be reconstructed again. Since the general video compression method performs the compression of the whole video image in the same manner without considering the inputted video image, the degree of the degradation in the picture quality is varied depending on characteristics of the video image even when the quantization parameter values are identical.

The degradation of the picture quality, which is mainly recognized by human's eyes, includes a blocking phenomenon and a ringing phenomenon. The blocking phenomenon is a phenomenon that the video image is viewed not naturally but discontinuously in each block, which is minimum compression unit. When the quantization is performed after the block-based DCT, the DCT is the lossless scheme and the quantization is the lossy scheme. Due to the lost information, the blocking phenomenon occurs in DCT unit when the video image is reconstructed.

The blocking phenomenon generally occurs at low frequency regions, specifically at sharp edged regions more seriously. On the contrary, the blocking phenomenon is not recognized seriously at high frequency regions.

The ringing phenomenon is a phenomenon that bright and dark portions appears alternately in the inputted video image so that the image gets brighter or darker in an image scan direction. At this point, the ringing phenomenon occurs at sharp edged regions more seriously.

In this invention, considering the two factors of the picture quality degradation, that is, the blocking phenomenon and the ringing phenomenon, characteristics of the inputted video image are classified and proper processes are performed according them, thereby enhancing the picture quality much more even at the same amount of compression as the general video compression.

Here, the proper processes include a process of setting the quantization parameter (QP) differently depending on the characteristics of the inputted video image and a process of passing the video image through low pass filter (LPF). The two methods using the quantization parameter and the LPF are to reduce an amount of compressed data. However, if the quantization parameter and the LPF are properly used considering the characteristics of the inputted video image, it is possible to enhance the picture quality while maintaining an amount of compressed data.

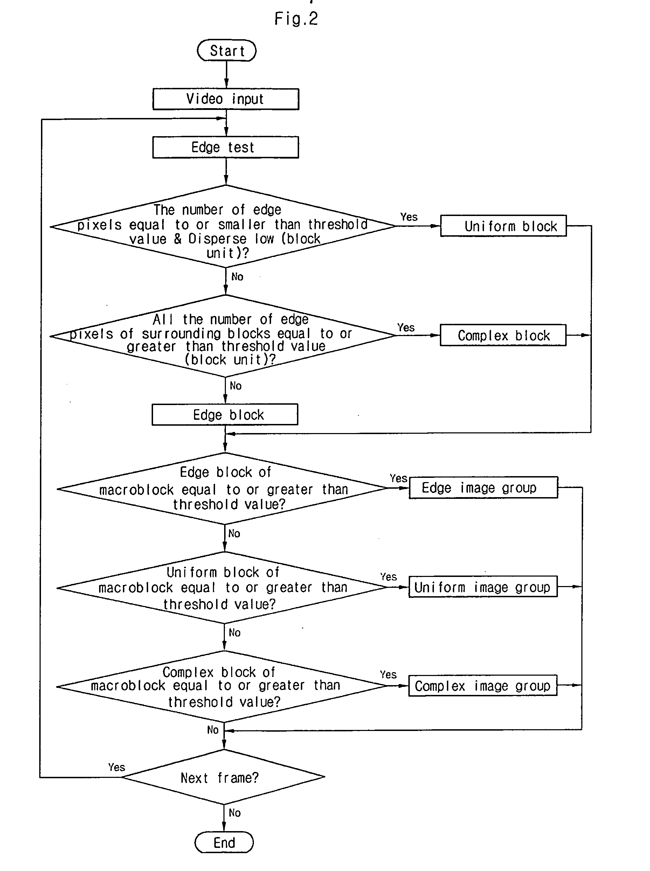

Here, the inputted video image may be largely divided into an edge block, a flat block (uniform block), and a complex block. The edge block, the flat block and the complex block can be divided using an edge test, a dispersion, a brightness, and so on. In other words, the blocks can be divided according to complexity of adjacent blocks enclosing a test block. The complexity of the adjacent blocks can be calculated by reflecting a dispersion and a spreading degree of a spatial complexity. These sequential procedures are shown in Fig. 2.

Referring to Fig. 2, an edge test is performed to the inputted video image to judge whether it is a flat block, a complex block or an edge block. Then, it is judged whether macroblocks containing the respective blocks are an edge image group, a flat image group (uniform image group) or a complex image block.

In more detail, candidate regions are extracted using the edge test and classified into the edge block and the complex block.

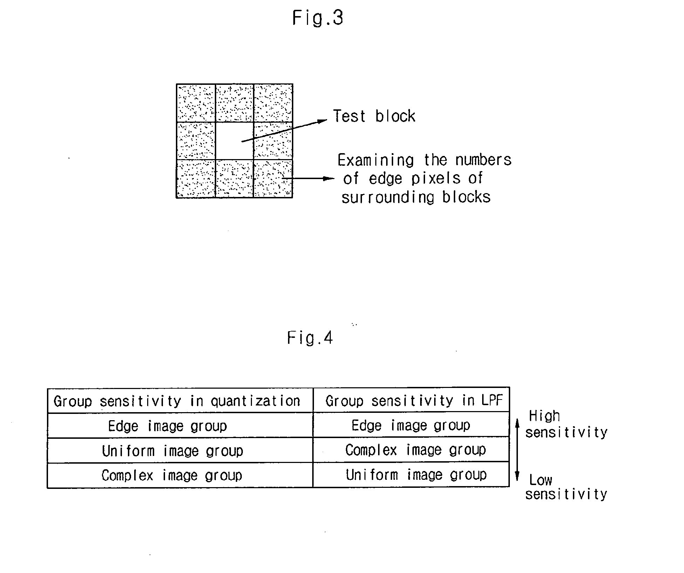

At this point, as shown in Fig. 3, if all edge candidate pixels of eight blocks around a test block are equal to or greater than a threshold value, the test block is classified as the complex block. After edge candidate regions are extracted using the edge test, if surrounding regions of block are not the complex patterns, the block is classified as the edge block. The flat block (uniform block) is a region that is not classified as the edge candidate region in the edge test and has a low dispersion.

In this invention, after the block-based group classification, the group classification is performed based on macroblock unit once again. This is because the quantization unit in the video compression is the macroblock unit.

If the number of the edge blocks in one macroblock is equal to or greater than the threshold value, the corresponding macroblock is judged as the edge image group. If the number of the flat blocks in one macroblock is.equal to or greater than the threshold value, the corresponding macroblock is judged as the flat image block. Also, if the number of the complex blocks in one macroblock is equal to or greater than the threshold value, the corresponding macroblock is judged as the complex image group.

Meanwhile, since the edge image group is a boundary of an object or a line contained therein, human's eyes responds very sensitively if the picture quality is degraded at the edge region. The picture quality degradation at the edge image group, such as a blocking phenomenon due to the quantization parameter or a blurry picture due to the LPF, is conspicuous. Accordingly, the edge image group is classified as a group that is sensitive to the picture quality degradation due to the quantization parameter and the LFP.

The flat image group (uniform image group) is a region in which there is no great change in the image itself, like person's cheeks or walls. In case of the flat image group, the picture quality degradation due to the quantization parameter is conspicuous, but the picture quality degradation due to the LPF is inconspicuous.

Also, in case of the complex image group, the picture quality degradation due to the quantization parameter is inconspicuous, but the picture quality degradation due to the LPF is conspicuous.

The sensitivity of the above-described image groups is summarized in Fig. 4. Fig. 4 illustrates the sensitivity in case the quantization parameter and the LPF are applied to the edge image group, the flat image group and the complex image group in the moving picture coding method according to the present invention.

According to the present invention, when the inputted video image is classified into groups and is compressed, different quantization parameters and LPFs are used according to the characteristic of the groups. By this manner, it is possible to obtain more excellent picture quality than the related art video compression method. When the video image is compressed, the groups of the inputted video image are classified based on macroblock unit, which is a unit for applying quantization parameter.

The quantization parameter is calculated to adjust an amount of data which is compressed with matching with the set bandwidth. The values of the quantization parameter are changed by assigning different weights to an initial quantization parameter that is calculated according to the group characteristics of the inputted video image. In the grouping of the inputted video image based on macroblock unit, if the region of the inputted video image is judged as the edge image group, the quantization parameter is set to a value smaller than the initial quantization parameter, because the picture quality degradation due to the quantization occurs most sensitively at the corresponding region.

If the region of the inputted video image is judged as the flat image group, the picture quality degradation at the flat image group is recognized less than that at the edge image group. However, since this group is also recognized sensitively, a proper weight is assigned to the initial quantization parameter, thereby changing the quantization parameter. Meanwhile, if the region of the inputted video image is judged as the complex image group, the quantization parameter is set to a value greater than the initial quantization parameter. The above-described weight is changed depending on the distributions of the edge image group, the flat image group and the complex image group.

Additionally, the LPF decreases length of the VLC, thereby reducing data that is encoded. High frequency information is eliminated through the LPF. Therefore, in the encoding process, it is advantageous to the VLC, so that an amount of compressed data is reduced.

In this invention, if the region of the inputted video image is judged as the edge image group, magnitude of passband frequency is set to be large, because the picture quality degradation due to the LPF occurs most sensitively at the corresponding region. If the region of the inputted video image is judged as the flat image group, magnitude of passband frequency is set to be small, because the picture quality degradation due to the LPF occurs most insensitively at the corresponding region. If the region of the inputted video image is judged as the complex image group, magnitude of passband frequency is set to be around the middle of the edge image group and the flat image group, because the picture quality degradation due to the LPF is around the middle of the edge image group and the flat image group.

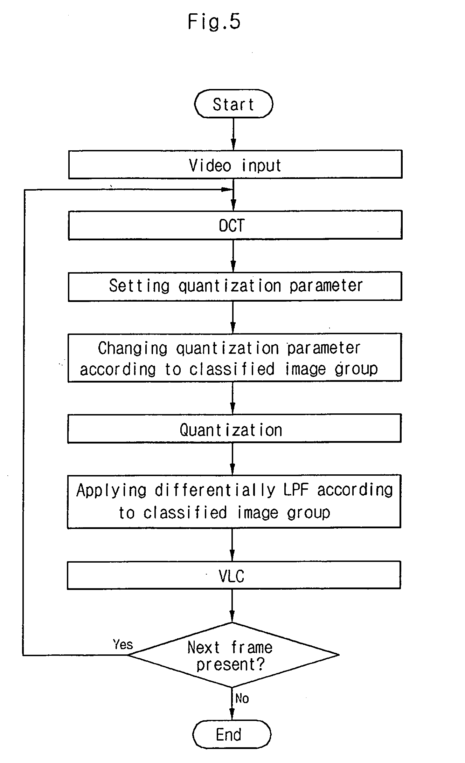

Such sequential procedures are shown in Fig. 5. Fig. 5 is a flowchart illustrating sequential procedures of coding the moving picture in the moving picture coding method according to the present invention.

As described above, the multimedia transmission services are provided in mobile environment as well as Internet, and the video compression is widely used for the video image having a large amount of transmission data. However, the picture quality is greatly degraded after the video compression is performed. Also, since the characteristics of the inputted image are not considered, the picture quality is degraded greatly at some regions but less at some regions.

In this invention, based on these facts, the inputted image is classified into the several groups using characteristic of the sense of sight, a proper quantization is performed thereto, and then the groups pass through the LPF. By doing so, more excellent picture quality can be obtained while the same compression as the related art video compression is performed. Further, in case of the same picture quality, the compression ratio is higher.

According to the moving picture coding method of the present invention, more excellent picture quality can be provided to any video streaming services and higher compression ratio allows users to receive the services at low service charge.

According to the present invention, in order to minimize the picture quality degradation that occurs in the moving picture coding, data of regions to which human's eyes are less sensitive are eliminated much and data of the other regions are eliminated less, thereby maintaining more excellent picture quality with respect to the same amount of data than the related art compression method.

It will be apparent to those skilled in the art that various modifications and variations can be made in the present invention. Thus, it is intended that the present invention covers the modifications and variations of this invention provided they come within the scope of the appended claims and their equivalents.

The claims refer to examples of preferred embodiments of the invention. However, the invention also refers to combinations of any claim or claims with any other claim or claims and/or with any feature or combination of features which is or are disclosed in the description and/or in the drawings.

## Claims

1. A moving picture coding method, comprising the steps of:
extracting a motion vector with respect to an inputted image through motion estimation and motion compensation, performing Discrete cosine transform (DCT) to a corresponding difference image, and setting an initial quantization parameter;
classifying the inputted image into an edge image group, a flat image group (an uniform image group), and a complex image group, based on macroblock unit, according to characteristic of a sense of sight;
assigning different weights according to the classified image groups to change the quantization parameter for the respective image groups; and
performing a quantization using the changed quantization parameter.

2. The moving picture coding method according to claim 1, wherein the quantization parameter for the edge image group is set to be smaller than the initial quantization parameter.

3. The moving picture coding method according to claim 1, wherein the quantization parameter for the complex image group is set to be greater than the initial quantization parameter.

4. The moving picture coding method according to claim 1, wherein the step of classifying the inputted image into the image groups includes the steps of:
classifying the inputted image into an edge block, a flat block (an uniform block), a complex block according to the characteristic of the sense of sight by referring to complexity of surrounding blocks, based on block unit; and
classifying the inputted image into the edge image group, the flat image group (the uniform image group), and the complex image group, based on the macroblock unit, depending on the number of the classified blocks in the macroblock of the inputted image.

5. The moving picture coding method according to claim 4, wherein the complexity of the surrounding blocks is calculated by reflecting a dispersion and a spreading degree of a spatial complexity.

6. The moving picture coding method according to claim 1, wherein magnitude of the quantization parameter changed according to the respective image groups is set to increase in order of the edge image group, the flat image group (the uniform image group) and the complex image group.

7. A moving picture coding method, comprising the steps of:
extracting a motion vector with respect to an inputted image through motion estimation and motion compensation, performing a Discrete cosine transform (DCT) to a corresponding difference image, and setting a quantization parameter;
classifying the inputted image into an edge image group, a flat image group (an uniform image group), and a complex image group, based on macroblock unit, according to characteristic of a sense of sight;
performing a quantization using the set quantization parameter;
applying low pass filters (LPFs) having different frequency magnitudes according to the classified image groups; and
performing a variable length coding (VLC) to the respective image groups to which the low pass filters are applied differently.

8. The moving picture coding method according to claim 7, wherein the step of classifying the inputted image into the image groups includes the steps of:
classifying the inputted image into an edge block, a flat block (an uniform block), a complex block according to the characteristic of the sense of sight by referring to complexity of surrounding blocks, based on block unit; and
classifying the inputted image into the edge image group, the flat image group (the uniform image group), and the complex image group, based on the macroblock unit, depending on the number of the classified blocks in the macroblock of the inputted image.

9. The moving picture coding method according to claim 8, wherein the complexity of the surrounding blocks is calculated by reflecting a dispersion and a spreading degree of a spatial complexity.

10. The moving picture coding method according to claim 7, wherein the frequency magnitude of the low pass filters applied differently according to the respective image groups is set to increase in order of the complex image group, the flat image group (the uniform image group) and the edge image group.

11. A moving picture coding method, comprising the steps of:
extracting a motion vector with respect to an inputted image through motion estimation and motion compensation, performing a Discrete cosine transform (DCT) to a corresponding difference image, and setting a quantization parameter;
classifying the inputted image into an edge image group, a flat image group (an uniform image group), and a complex image group, based on macroblock unit, according to characteristic of a sense of sight;
assigning different weights according to the classified image groups to change the quantization parameter for the respective image groups;
performing a quantization using the changed quantization parameter;
applying low pass filters (LPFs) having different frequency magnitudes according to the classified image groups; and
performing a variable length coding (VLC) to the respective image groups to which the low pass filters are applied differently.

12. The moving picture coding method according to claim 11, wherein the step of classifying the inputted image into the image groups includes the steps of:
classifying the inputted image into an edge block, a flat block (an uniform block), a complex block according to the characteristic of the sense of sight by referring to complexity of surrounding blocks, based on block unit; and
classifying the inputted image into the edge image group, the flat image group (the uniform image group), and the complex image group, based on the macroblock unit, depending on the number of the classified blocks in the macroblock of the inputted image.

13. The moving picture coding method according to claim 12, wherein the complexity of the surrounding blocks is calculated by reflecting a dispersion and a spreading degree of a spatial complexity.

14. The moving picture coding method according to claim 11, wherein magnitude of the quantization parameter changed according to the respective image groups is set to increase in order of the edge image group, the flat image group (the uniform image group) and the complex image group.

15. The moving picture coding method according to claim 11, wherein the frequency magnitude of the low pass filters applied differently according to the respective image groups is set to increase in order of the complex image group, the flat image group (the uniform image group) and the edge image group.
